Europäisches Patentamt

European Patent Office

Office européen des brevets

(19)

(11) Publication number: **0 143 645**
**A1**

# (12) EUROPEAN PATENT APPLICATION

(21) Application number: **84308231.4**

(22) Date of filing: **28.11.84**

(51) Int. Cl.⁴: **G 02 B 6/26**, G 02 B 5/20,
H 04 J 15/00

(30) Priority: **28.11.83 GB 8331693**
**20.08.84 GB 8421107**

(43) Date of publication of application: **05.06.85**
**Bulletin 85/23**

(84) Designated Contracting States: **AT BE CH DE FR GB IT LI LU NL SE**

(71) Applicant: **BRITISH TELECOMMUNICATIONS plc, British Telecom Centre 81 Newgate Street, London EC1A 7AJ (GB)**

(72) Inventor: **Mallinson, Stephen Robert, 2 Fritton Close, Ipswich, Suffolk IP2 9TE (GB)**
Inventor: **McCartney, David John, 15 Somerset Road, Ipswich, Suffolk IP4 4BZ (GB)**

(74) Representative: **Wolff, Eric et al, BRITISH TELECOM Intellectual Property Unit 13th Floor 151 Gower Street, London WC1E 6BA (GB)**

(54) Optical filters.

(57) An optical filter is formed between the end face of an optical fibre (11) and a glass plate (32). The end face of the fibre and the face surface of the plate (32) are coated with a highly reflective coating. The fibre and plate define a Fabry-Perot cavity which transmits a particular wavelength or narrow range of wavelengths which can be detected by a photo-detector (15).

- 1 -

OPTICAL FILTERS

DESCRIPTION

This invention relates to optical filters, and more particularly to optical filters for optical communications systems.

It has been known for some time that gaps, such as may occur, for example, in optical fibre connectors between the ends of two adjoining optical fibres result in transmission losses which persist even though the fibres are in accurate axial alignment, and which are caused by optical interference effects. Several workers have investigated these interference effects with a view to minimising the accompanying losses (c.f., for example, R.E. Wagner and C.R. Sandahl, "Interference effects in optical fibre connections", Applied Optics, Vol. 21, No. 8, pp 1381-1385), or with a view to using the interference effects for measuring the gap between the fibre ends. Thus, for example, it was observed by R.E. Wagner and C.R. Sandahl (op.cit.) that losses due to interference varied with fibre end separation, and that the losses could be eliminated by bringing the fibre ends into

0143645

- 2 -

intimate contact.

The present invention is based on our appreciation that interference effects due to a gap at the end of an optical fibre can be turned to advantage, in that if the gap at the end of the fibre is formed between two sufficiently reflective surfaces and has the appropriate dimensions, it defines a wavelength selective Fabry-Perot cavity which can be employed to form comparatively simple yet effective optical filters for optical communications systems.

Thus, according to the present invention there is provided an optical filter in which an end face of an optical fibre, treated to have increased reflectivity, is spaced from a reflective surface to define a cavity which transmits only a particular wavelength or narrow range of wavelengths.

In order to achieve the wavelength selectivity required for optical communications systems, e.g. for purposes of demultiplexing wavelength division multiplexed optical signals, the fibre needs to be a single mode fibre.

Said reflective surface may be provided preferably on the end face of a further optical fibre, this further fibre being a multimode optical fibre.

In another preferred form of the present

- 3 -

invention the reflective surface may be provided on a reflective transparent plate such as, for example, a glass plate.

In order to obtain the required reflectivity, the fibre end face and/or the reflective surface will typically have a suitable coating of metal or dielectric material applied thereto.

The optical path length of the cavity may be made variable to provide a tunable optical filter.

The optical path length of the cavity may be variable, for example, by varying the spacing between the fibre end face and the reflective surface. Thus, the aforementioned multimode fibre may, for example, be mounted in a piezo-electric element which can be employed to vary the axial position of the multimode fibre.

Instead of varying the optical path length by varying mechanically the length of the cavity, the path length may be varied electro-optically, for example.

A photodetector may be arranged to receive light transmitted through the cavity.

The monomode fibre may be mounted in a sleeve comprising shape memory effect (SME) metal.

The optical filter according to the invention may

- 4 -

be arranged to select a particular wavelength or band of wavelengths from a range of wavelengths being transmitted along the said fibre.

The invention will be described now by way of example only with particular reference to the accompanying drawings of which:-

Figure 1 is a schematic side sectional view of an optical fibre to fibre filter in accordance with the present invention;

Figure 2 is a graph illustrating the transmission characteristics of the filter of Figure 1; and

Figure 3 is a schematic diagram of another embodiment of the present invention employing a reflective plate.

An optical fibre connector for joining two optical fibres in axial alignment comprises a cylindrical housing 10. The cylindrical housing 10 has a through bore having a relatively small diameter first portion 11, a relatively large diameter second portion 12 and an intermediate diameter third portion 14. A sleeve 15 made from shape memory effect (SME) material fits tightly within the bore 14. The end of a monomode optical fibre 16 which is located within a ferrule connector 17, fits tightly within the sleeve 15.

- 5 -

The bore portion 12 accommodates a tubular piezoelectric device 18 within which is located part of a connector ferrule 19. The connector ferrule 19 is located at the end of a multimode fibre 20 and extends into the bore of the sleeve 15 terminating a small distance from the end of the ferrule 17. The ferrule 19 is a sliding fit within the tube 15. The end of the optical fibre 16 and the end of the optical fibre 20 have each been coated with a coating which is highly reflective at a wavelength of $1.3 \ \mu m$. The spacing between the fibre ends is selected so that a Fabry-Perot cavity 21 is defined therebetween whereby that cavity acts as a wavelength selective filter to transmit only a particular narrow range of the wavelengths being transmitted along the monomode fibre 16. The position of the end of the fibre relative to that of the fibre 16 can be adjusted by actuating the piezoelectric device 18 to move the ferrule 19 in an axial direction. In this way the size of the cavity 21 can be varied to adjust the wavelength transmitted by the cavity. Typically the spacing between the fibre end faces is of the order of one to several times the wavelength of the optical signals transmitted along the optical fibres.

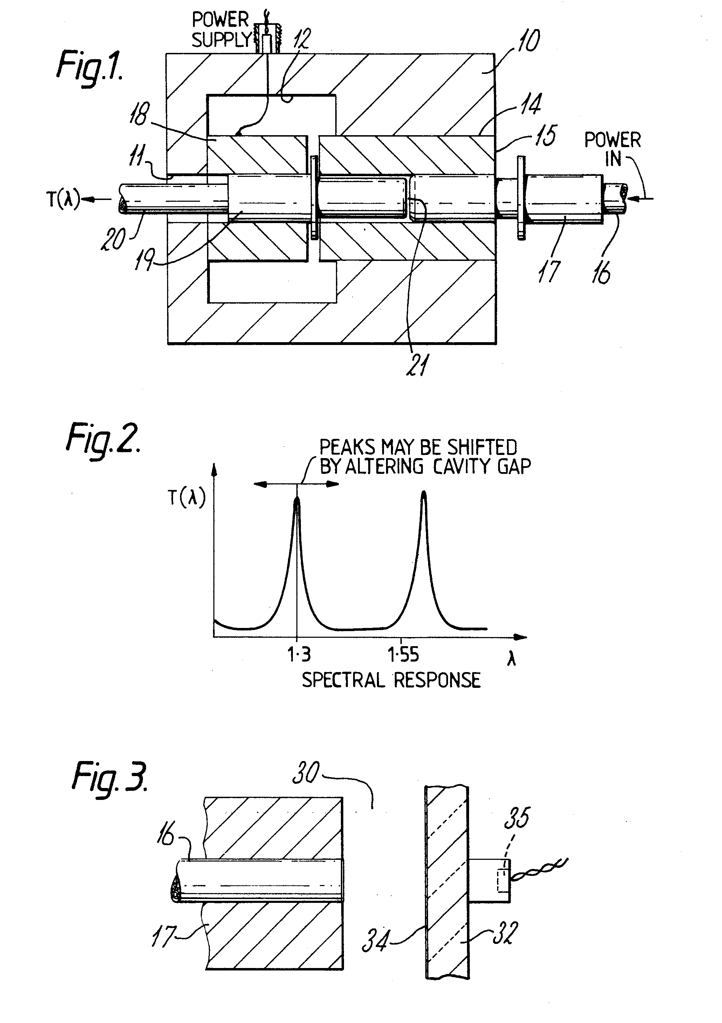

Figure 2 illustrates a typical spectral response

- 6 -

for transmitted light propagated along the receiving fibre 20.

In the embodiment of Figure 3 the optical filter is provided by a Fabry-Perot cavity 30 which is defined between the end face of an optical fibre 11 and a glass plate 32. The end face of the fibre 11 and the face 34 of the plate are each coated with a coating which is highly reflective in the wavelength range to be scanned by the filter, typically in the region of $1.3\,\mu\text{m}$. A photodetector 35 is positioned to receive light transmitted through the filter. The size of the cavity 30 is carefully selected so that it transmits a particular wavelength or narrow range of wavelengths.

It will be appreciated that the Figure 3 is a schematic representation only of an optical filter. The optical fibre end will be carried in a termination, for example, one similar to that of Figure 1, which will itself be mounted in a precision mounting e.g. a connector ferrule. Similarly, the glass plate will be mounted in a precision mounting. Preferably either or both of the mountings will be such as to permit axial movement of the fibre end face and/or glass plate. This arrangement allows the cavity size to be varied so that the wavelength of the

- 7 -

transmitted light can be adjusted.

The arrangement shown in the Figure could be modified by replacing the photodetector by another optical fibre.

A number of applications are envisaged for the optical filters in accordance with the present invention. They could be used, for example, as demultiplexers in wavelength multiplexed optical transmission systems. In such a system, information is transmitted along optical fibres at a plurality of specific wavelengths. A subscriber can select the information which he requires to receive by tuning his filter to transmit the wavelength associated with the required information.

- 8 -

CLAIMS

1. An optical filter in which the end face of an optical fibre is spaced from a reflective surface to define a cavity which transmits only a particular wavelength or narrow range of wavelengths.

2. An optical filter as claimed in claim 1, wherein the reflective surface is provided by a reflective coating on a glass plate.

3. An optical filter as claimed in claim 1 or claim 2, wherein the optical path length of the cavity is variable.

4. An optical filter as claimed in claim 3, wherein the optical path length of the cavity is variable by varying the spacing between the fibre end face and the reflective surface.

5. An optical filter as claimed in any preceding claim, including a photodetector arranged to receive light transmitted through the cavity.

6. An optical filter as claimed in any preceding claim wherein the optical fibre is a monomode optical fibre.

7. An optical filter as claimed in any preceding claim wherein the reflective surface is provided by a reflective coating on an end face of a multimode optical fibre.

8. An optical filter as claimed in any preceding claim wherein the optical path length of the cavity is varied electro-optically.

*Fig.1.*

POWER
SUPPLY    12

18

11

T(λ)←

20

19

10

14

15

POWER
IN

17    16

21

*Fig.2.*

PEAKS MAY BE SHIFTED
BY ALTERING CAVITY GAP

T(λ)

1·3        1·55        λ
SPECTRAL RESPONSE

*Fig.3.*

30

16

17

35

34    32

European Patent Office

**EUROPEAN SEARCH REPORT**

EP 84 30 8231

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A,D | APPLIED OPTICS, vol.21, no 8, April 1982, pages 1381-1385 NEW YORK (US). R. WAGNER et al.:"Interference effects in optical fiber connections". <br><br> * Chapters I,II,III; figure 1 * <br><br> --- | 1,3,4 7 | G 02 B 6/26 <br> G 02 B 5/20 <br> H 04 J 15/00 |
| A | DE-A-3 149 616 (LICENTIA PATENT-VERWALTUNGS-GmbH) <br><br> * Claims 1-3; figures * <br><br> --- | 1,3,4, 6,7 | |
| A | EP-A-0 030 108 (THE POST OFFICE) <br><br> * Page 3, line 34 - page 4, line 8; page 7, lines 22-34; figure 1 * <br><br> --- | 8 | |
| A | US-A-4 145 110 (O. SZENTESI) <br><br> --- | | TECHNICAL FIELDS SEARCHED (Int. Cl.4) <br><br> G 02 B <br> H 04 J |
| A | EP-A-0 037 793 (J. HICKS Jr) <br><br> --- | | |
| A | US-A-4 341 442 (M. JOHNSON) <br><br> ----- | | |

The present search report has been drawn up for all claims

| Place of search | Date of completion of the search | Examiner |
|---|---|---|
| THE HAGUE | 26-02-1985 | Mlle. MORRELL D. |